# EUROPEAN PATENT APPLICATION

(11) **EP 4 517 216 A1**
(43) Date of publication of application: **05.03.2025**
(21) Application number: 23796246.9
(22) Date of filing: 20.04.2023
(51) Int. Cl.: F25B 1/00, C09K 5/04

(54) **AIR CONDITIONER**

(30) Priority: 26.04.2022 JP 2022072257
(71) Applicant: Panasonic Intellectual Property Management Co., Ltd., Kadoma-shi, Osaka 571-0057 (JP)
(72) Inventor: SATOH, Keiji, Kadoma-shi, Osaka 571-0057 (JP); HIWATA, Akira, Kadoma-shi, Osaka 571-0057 (JP)
(74) Representative: Eisenführ Speiser
(86) International application number: PCT/JP2023/015807
(87) International publication number: WO 2023/210504

(57) **Abstract**

An air conditioner includes a refrigeration cycle including a hermetic compressor in which a refrigerating machine oil is retained. The air conditioner uses a refrigerant mixture as a refrigerant, and the refrigerant mixture contains a fluoroolefin and propane. A refrigeration cycle working medium composed of the refrigerating machine oil and the refrigerant mixture exhibits a refrigerant dissolved viscosity of 2 to 4 mm²/s under a working condition at a temperature of 28 to 60°C and an absolute pressure of 2.2 to 4.3 MPa. Thus, the air conditioner using the refrigeration cycle working medium containing the fluoroolefin can achieve a satisfactory COP and successfully inhibit disproportionation of the fluoroolefin.

## Description

### Technical Field

The present invention relates to an air conditioner using a refrigeration cycle working medium containing a fluoroolefin and particularly relates to an air conditioner that can successfully inhibit disproportionation of a fluoroolefin.

### Background Art

A refrigeration cycle working medium is usually composed of a refrigerant and a refrigerating machine oil (lubricating oil retained in a hermetic compressor). HCFCs (hydrochlorofluorocarbons) had been used as refrigerants in the past; however, they contribute considerably to ozone depletion. Thus, in recent years, HFCs (hydrofluorocarbons) having an ozone depletion potential (ODP) of zero have been used. A typical example is difluoromethane (HFC-32 or R-32).

Although HFCs have stability when used as refrigeration cycle working media, they have a long atmospheric lifetime and therefore a high global warming potential (GWP). Thus, nowadays, the use of fluoroolefins having a lower GWP than HFCs, in particular the use of hydrofluoroolefins (HFOs), has been proposed. For example, 1,1,2-trifluoroethylene (HFO-1123) is known as an HFO having a low GWP, having high cooling ability, and having performance similar to that of R-32 which is currently in widespread use.

Having a low GWP means having a short atmospheric lifetime. That is, fluoroolefins are easily chemically decomposed and have low stability. A fluoroolefin such as HFO-1123 is known to easily undergo a self-polymerization reaction called a disproportionation reaction (hereinafter referred to as "disproportionation").

Disproportionation is often induced, for example, by heat generated during the use of a refrigeration cycle working medium, and the occurrence of disproportionation entails a large amount of heat release. Thus, a chain reaction of disproportionation is known to occur. Such disproportionation results in a large amount of soot, which could reduce the reliability of the refrigeration cycle system or a component such as a compressor of the system.

One known index of the performance of a refrigeration system configured using a refrigeration cycle working medium is a coefficient of performance (COP). For example, when the refrigeration system is used in an air conditioner, the COP is calculated as the ratio of cooling capacity (or cooling/heating capacity) to energy consumption in the refrigeration system.

Known examples of technologies for improving the COP of a refrigeration system using an HFO as a refrigeration cycle working medium include a refrigerating machine, a refrigerating machine manufacturing method, and a COP improving method which are disclosed in Patent Literature 1.

In the refrigeration system (refrigerating machine) disclosed in Patent Literature 1, the refrigeration system working medium is not limited to that which contains a fluoroolefin. Patent Literature 1 discloses that a fluorine-containing refrigerant such as an HFC or HFO may be used or a natural refrigerant such as a hydrocarbon refrigerant, ammonia (R-717), or carbon dioxide (R-744) may be used. In Patent Literature 1, a refrigerant mixture combining different types of refrigerants is used as an exemplary refrigerant, and a refrigeration system working medium composed of the refrigerant mixture and a refrigerating machine oil is used. The working medium exhibits a refrigerant dissolved viscosity of 2 to 4 mm²/s at a temperature of 80°C and an absolute pressure of 3.4 MPa.

### Citation List

### Patent Literature

PTL 1: Japanese Laid-Open Patent Application Publication No. 2017-141974

### Summary of Invention

### Technical Problem

In the refrigeration system disclosed in Patent Literature 1, as previously mentioned, usable refrigerants are not limited to fluoroolefins. Thus, the refrigeration system disclosed in Patent Literature 1 is not suitable for successfully inhibiting disproportionation of a fluoroolefin. In particular, there is a need not only to achieve a satisfactory COP in an air conditioner incorporating a refrigeration system using a refrigeration cycle working medium containing a fluoroolefin but also to successfully inhibit disproportionation of the fluoroolefin in the air conditioner.

The present invention has been made to solve the problem as described above, and an object of the present invention is to achieve a satisfactory COP in an air conditioner using a refrigeration cycle working medium containing a fluoroolefin and at the same time successfully inhibit disproportionation of the fluoroolefin in the air conditioner.

### Solution to Problem

In order to solve the problem as described above, an air conditioner according to the present invention includes a refrigeration cycle including a hermetic compressor in which a refrigerating machine oil is retained, wherein the air conditioner uses a refrigerant mixture as a refrigerant, the refrigerant mixture containing a fluoroolefin and propane, and a refrigeration cycle working medium composed of at least the refrigerating machine oil and the refrigerant mixture exhibits a refrigerant dissolved viscosity of 2 to 4 mm²/s under a working condition at a temperature of 28 to 60°C and an absolute pressure of 2.2 to 4.3 MPa.

In the above configuration, where the refrigerant dissolved viscosity of the refrigeration cycle working medium is in the range specified above, the propane contained in the refrigerant mixture easily dissolves in the refrigerating machine oil. Thus, when the hermetic compressor is not in operation, the amount of the fluoroolefin contained in the refrigerant mixture present in the hermetic compressor is apparently large, while when the hermetic compressor is in operation, the propane dissolved in the refrigerating machine oil is liberated from the refrigerating machine oil as the temperature increases.

Thus, the propane, which is more combustible than the fluororesin, easily dissolves in the refrigerating machine oil when the hermetic compressor is not in operation. This means that the apparent amount of the propane in the refrigerant mixture decreases. Hence, even in the event of leakage of the refrigerant mixture, the risk of burning of the leaking refrigerant mixture can be successfully reduced. When the hermetic compressor is in operation, the propane is liberated from the refrigerating machine oil, and the apparent amount of the propane in the refrigerant mixture increases. Thus, disproportionation of the fluoroolefin can be successfully inhibited by the propane which has a disproportionation-inhibiting action on the fluoroolefin.

Additionally, when the refrigerant dissolved viscosity of the refrigeration cycle working medium is in the range specified above, the refrigeration cycle can achieve both reduced energy consumption and satisfactory refrigeration capacity. As a result, the air conditioner using the refrigeration cycle working medium containing the fluoroolefin can achieve a satisfactory COP and successfully inhibit disproportionation of the fluoroolefin.

The above and further objects, features and advantages of the present invention will be more apparent from the following detailed description of preferred embodiments with reference to the accompanying drawings.

### Advantageous Effects of Invention

The present invention can provide an air conditioner configured as described above which uses a refrigeration cycle working medium containing a fluoroolefin and which can achieve a satisfactory COP and successfully inhibit disproportionation of the fluoroolefin.

### Brief Description of Drawings

FIG 1 is a schematic piping diagram showing an exemplary configuration of an air conditioner according to an exemplary embodiment of the present disclosure.
FIG 2 is a cross-sectional view showing an exemplary configuration of a hermetic compressor of the air conditioner of FIG 1.
FIG 3A is a graph showing an example of the relationship between a refrigeration cycle working medium and the COP of an air conditioner, the refrigeration cycle working medium being composed of an exemplary refrigerant mixture of the present embodiment and a refrigerating machine oil.
FIG 3B is a graph showing the relationship between the compatibility with the refrigerating machine oil and the temperature for each of a fluoroolefin and propane of which the exemplary refrigerant mixture of FIG 3A is composed.

### Description of Embodiments

An air conditioner according to the present disclosure includes a refrigeration cycle including a hermetic compressor in which a refrigerating machine oil is retained, wherein the air conditioner uses a refrigerant mixture as a refrigerant, the refrigerant mixture containing a fluoroolefin and propane, and a refrigeration cycle working medium composed of at least the refrigerating machine oil and the refrigerant mixture exhibits a refrigerant dissolved viscosity of 2 to 4 mm²/s under a working condition at a temperature of 28 to 60°C and an absolute pressure of 2.2 to 4.3 MPa.

In the above configuration, where the refrigerant dissolved viscosity of the refrigeration cycle working medium is in the range specified above, the propane contained in the refrigerant mixture easily dissolves in the refrigerating machine oil. Thus, when the hermetic compressor is not in operation, the amount of the fluoroolefin contained in the refrigerant mixture present in the hermetic compressor is apparently large, while when the hermetic compressor is in operation, the propane dissolved in the refrigerating machine oil is liberated from the refrigerating machine oil as the temperature increases.

Thus, the propane, which is more combustible than the fluororesin, easily dissolves in the refrigerating machine oil when the hermetic compressor is not in operation. This means that the apparent amount of the propane in the refrigerant mixture decreases. Hence, even in the event of leakage of the refrigerant mixture, the risk of burning of the leaking refrigerant mixture can be successfully reduced. When the hermetic compressor is in operation, the propane is liberated from the refrigerating machine oil, and the apparent amount of the propane in the refrigerant mixture increases. Thus, disproportionation of the fluoroolefin can be successfully inhibited by the propane which has a disproportionation-inhibiting action on the fluoroolefin.

Additionally, when the refrigerant dissolved viscosity of the refrigeration cycle working medium is in the range specified above, the refrigeration cycle can achieve both reduced energy consumption and satisfactory refrigeration capacity. As a result, the air conditioner using the refrigeration cycle working medium containing the fluoroolefin can achieve a satisfactory COP and successfully inhibit disproportionation of the fluoroolefin.

In the air conditioner configured as described above, the refrigeration cycle working medium may exhibit a refrigerant dissolved viscosity of 2 to 4 mm²/s under a working condition at a temperature of 115°C or lower and an absolute pressure of 1.7 to 4.6 MPa.

In the air conditioner configured as described above, the temperature in the working condition may range from 55 to 115°C.

In the air conditioner configured as described above, compatibility of the refrigerant mixture with the refrigerating machine oil may be adjusted such that a proportion of the propane to a total mass of the fluoroolefin and the propane in the hermetic compressor is 20% by mass or more in case that the temperature in the working condition is higher than 115°C.

In the air conditioner configured as described above, compatibility of the refrigerant mixture with the refrigerating machine oil may be adjusted such that a proportion of the propane to a total mass of the fluoroolefin and the propane in the hermetic compressor is less than 20% by mass in case that the temperature in the working condition is 115°C or lower.

In the air conditioner configured as described above, the proportion of the propane to the total mass of the fluoroolefin and the propane in the refrigerant mixture may be more than 20% by mass before the refrigerant mixture is included into the refrigeration cycle.

In the air conditioner configured as described above, the fluoroolefin may be at least one selected from the group consisting of 1,1,2-trifluoroethylene, *trans*-1,2-difluoroethylene, *cis*-1,2-difluoroethylene, 1,1-difluoroethylene, tetrafluoroethylene, and monofluoroethylene.

In the air conditioner configured as described above, the refrigerant mixture may further contain difluoromethane.

In the air conditioner configured as described above, the refrigerant mixture may further contain a disproportionation inhibitor.

In the air conditioner configured as described above, the disproportionation inhibitor may be a saturated hydrocarbon with two to five carbon atoms or a haloalkane with one or two carbon atoms, the saturated hydrocarbon may be other than propane, and the haloalkane may be other than a fluoroalkane containing only fluorine as a halogen substituent.

In the air conditioner configured as described above, the hermetic compressor may include a rotary compression mechanism.

In the air conditioner configured as described above, the hermetic compressor may be inverter-driven.

Hereinafter, exemplary embodiments of the present invention will be described with reference to the drawings. The same or equivalent elements are denoted by the same reference signs throughout the drawings and will not be described repeatedly.

### [Examples of configurations of air conditioner and hermetic compressor]

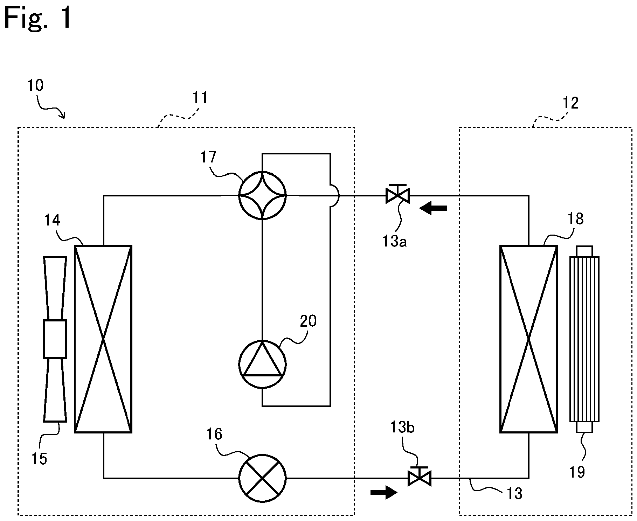

FIG 1 is a schematic diagram showing a typical example of an air conditioner 10 according to the present embodiment. As shown in FIG 1, the air conditioner 10 includes an outdoor unit 11 and an indoor unit 12, and these units 11 and 12 are connected by unit-to-unit piping 13. The indoor unit 12 is located in a space to be air-conditioned (hereinafter referred to as the "target space"), while the outdoor unit 11 is located at an outdoor location outside the target space. The unit-to-unit piping 13 is provided with a pipe connector 13a and a pipe connector 13b.

The air conditioner 10 compresses a refrigerant by the outdoor unit 11 and allows the compressed refrigerant to flow between the outdoor unit 11 and the indoor unit 12, thus air-conditioning the target space in which the indoor unit 12 is located. The air conditioner 10 is switchable between a cooling operation mode in which the air conditioner 10 cools the target space and a heating operation mode in which the air conditioner 10 heats the target space.

The outdoor unit 11 includes a hermetic compressor 20, an outdoor heat exchanger 14, an outdoor fan 15, an expansion valve 16, and a switching valve 17. The hermetic compressor 20 compresses a refrigeration cycle working medium containing the refrigerant. The outdoor heat exchanger 14 effects heat exchange of the refrigerant outside the target space (in an outdoor space). The outdoor fan 15 delivers outdoor air toward the outdoor heat exchanger 14. The expansion valve 16 decompresses and expands the refrigerant. The switching valve 17 operates for switching to the cooling operation mode or the heating operation mode.

The indoor unit 12 includes an indoor heat exchanger 18 and an indoor fan 19. The indoor heat exchanger 18 receives the refrigerant supplied from the outdoor unit 11 through the unit-to-unit piping 13 and effects heat exchange of the refrigerant in the target space. The indoor fan 19 delivers air present in the target space (in an indoor space).

The outdoor heat exchanger 14 functions as a condenser in the cooling operation mode and as an evaporator in the heating operation mode. The indoor heat exchanger 18 functions as an evaporator in the cooling operation mode and as a condenser in the heating operation mode. The hermetic compressor 20, the outdoor heat exchanger 14 (condenser or evaporator), the indoor heat exchanger 18 (evaporator or condenser), and the expansion valve 16 are connected in a loop by the unit-to-unit piping 13 to form a refrigeration cycle (refrigerant circuit).

The air conditioner 10 further includes a controller. The controller controls the operation of the hermetic compressor 20, the opening degree and/or opening/closing of the expansion valve 16, the flow path switching by the switching valve 17, and the activation and/or deactivation of the outdoor and indoor fans 15 and 19. The controller operates the expansion valve 16 and the switching valve 17 to switch the air conditioner 10 between the cooling operation mode and the heating operation mode. Furthermore, the controller controls the operation frequency or the activation and/or deactivation of the hermetic compressor 20 or controls the outdoor and indoor fans 15 and 19 based on an action or a setting made on an operation interface of the air conditioner 10, thus air-conditioning the target space according to a target temperature.

In the example of FIG 1, the direction in which the refrigerant flows during the cooling operation mode is shown by block arrows. In the cooling operation mode of the air conditioner 10, the refrigerant (refrigeration cycle working medium) flowing out of the hermetic compressor 20 passes through the outdoor heat exchanger 14, the expansion valve 16, and the indoor heat exchanger 18 in sequence to the switching valve 17 and returns from the switching valve 17 to the hermetic compressor 20. The direction in which the refrigerant flows during the heating operation mode is opposite to the direction shown by the block arrows in FIG 1. In the heating operation mode of the air conditioner 10, the refrigerant flowing out of the hermetic compressor 20 passes through the indoor heat exchanger 18, the expansion valve 16, and the outdoor heat exchanger 14 in sequence to the switching valve 17 and returns from the switching valve 17 to the hermetic compressor 20.

The pipe connectors 13a and 13b of the air conditioner 10 are mounted to the unit-to-unit piping 13 made up of pipes connected in a loop and are located between the outdoor unit 11 and the indoor unit 12. For example, two-way or three-way valves are used as the pipe connectors 13a and 13b. The outdoor unit 11 and the indoor unit 12 are connected to each other through the pipe connectors 13a and 13b, so that the refrigerant can flow between the outdoor unit 11 and the indoor unit 12. The opening degree and/or opening/closing of each of the pipe connectors 13a and 13b can be controlled manually or by the controller.

The air conditioner 10, the outdoor unit 11, the indoor unit 12, or each of the components (such as the hermetic compressor 20, the outdoor heat exchanger 14, the outdoor fan 15, the expansion valve 16, the switching valve 17, the indoor heat exchanger 18, the indoor fan 19, the unit-to-unit piping 13, and the pipe connectors 13a and 13b) constituting the refrigeration cycle (refrigerant circuit) is not limited to having a particular configuration and may have any suitable known configuration. The refrigeration cycle (refrigerant circuit) is not limited to having the configuration shown as an example in FIG 1 and may further include another component or may be devoid of one or more of the components shown in FIG 1.

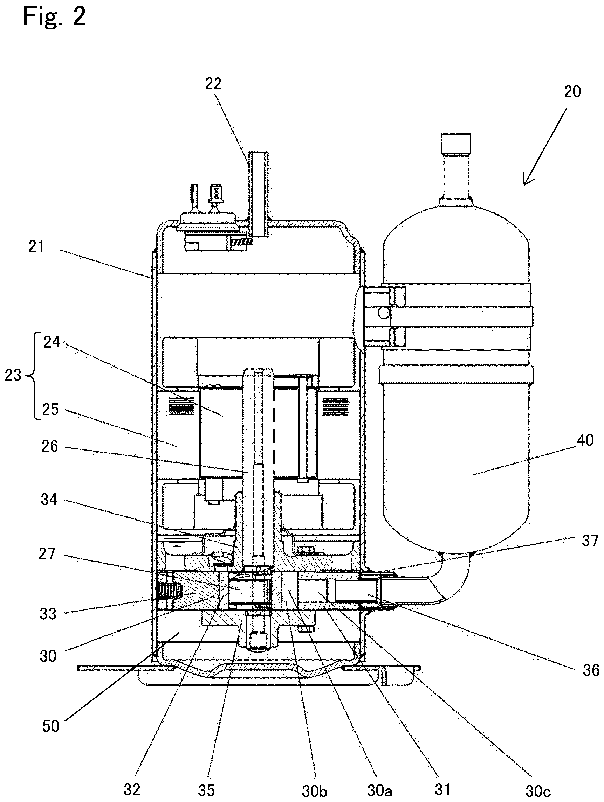

The following will describe a specific example of the configuration of the hermetic compressor 20 according to the present disclosure with reference to FIG 2. FIG 2 is a cross-sectional view showing a typical example of the configuration of the hermetic compressor 20 according to the present embodiment. As shown in FIG 2, the hermetic compressor 20 according to the present embodiment is a rotary compressor.

As shown in FIG 2, a hermetic enclosure 21 includes an internal space the entirety of which is a discharge pressure atmosphere communicating with a discharge pipe 22. An electric motor 23 and a compression mechanism 30 are housed in the hermetic enclosure 21. In the example of FIG 2, the electric motor 23 is located in a central region of the interior of the hermetic enclosure 21 and the compression mechanism 30 is located in a lower region of the interior of the hermetic enclosure 21.

The electric motor 23 is made up of a rotor 24 and a stator 25. The stator 25 is located radially outside the rotor 24, with a substantially constant gap between the stator 25 and the rotor 24. A crankshaft 26 is secured to the rotor 24 in alignment with the rotation axis of the rotor 24. The electric motor 23 is driven to rotate the rotor 24, and the rotation of the rotor 24 causes the crankshaft 26 to drive the compression mechanism 30. A crankshaft eccentric portion 27 is integral with the crankshaft 26.

In the present embodiment, for example, the electric motor 23 is driven by an inverter drive circuit at a plurality of operation frequencies including an operation frequency higher than a commercial power frequency. Thus, the hermetic compressor 20 according to the present embodiment may include an inverter circuit to rotationally drive the electric motor 23 at a plurality of operation rotational speeds. The method for driving the hermetic compressor 20 is not limited to the inverter drive described above. For example, the hermetic compressor 20 may be driven by simple on-off control. In the case where the hermetic compressor 20 is inverter-driven by an inverter circuit, the operation frequencies are not limited to particular frequencies.

The compression mechanism 30 includes a cylinder 31, a rolling piston 32, a vane 33, an upper bearing 34, and a lower bearing 35. The cylinder 31, the rolling piston 32, and the vane 33 are held between the upper bearing 34 and the lower bearing 35, and thus a suction chamber 30a and a compression chamber 30b are defined. The crankshaft eccentric portion 27 is located inside the cylinder 31, and the rolling piston 32 is rotatably mounted on the crankshaft eccentric portion 27. Inside the cylinder 31 there is the vane 33 in contact with the rolling piston 32, and the vane 33 divides the suction chamber 30a and the compression chamber 30b from each other.

The cylinder 31 is provided with a suction hole 30c adjacent to the suction chamber 30a. A suction liner 36 is inserted in the suction hole 30c. A high-temperature, high-pressure discharged gas in the hermetic enclosure 21 and a low-temperature, low-pressure sucked gas in the suction hole 30c are separated from each other by the suction liner 36. An accumulator 40 is connected to the suction liner 36 to prevent liquid compression in the compressor. The accumulator 40, together with an outer suction pipe 37 secured to the hermetic enclosure 21, is brazed or welded to the suction liner 36 and performs gas-liquid separation of the refrigeration cycle working medium sucked into the hermetic compressor 20.

A refrigerating machine oil 50 is retained on the bottom of the hermetic enclosure 21. The compression mechanism 30 is kept immersed in the refrigerating machine oil 50. The refrigerating machine oil 50 sucked up by the crankshaft 26 passes through an oil supply hole of the crankshaft eccentric portion 27, lubricates a sliding portion of the crankshaft eccentric portion 27, and reaches the inner circumference of the rolling piston 32.

Apart of the refrigerating machine oil 50 reaching the rolling piston 32 lubricates journal bearing sliding portions of the upper bearing 34 and the lower bearing 35 and is discharged out of the compression mechanism 30. Another part of the refrigerating machine oil 50 reaching the rolling piston 32 is supplied to the suction chamber 30a and the compression chamber 30b while lubricating sliding portions between the rolling piston 32 and the upper and lower bearings 34 and 35. The refrigerating machine oil 50 supplied to the back surface of the vane 33 lubricates a sliding portion of the vane 33 and is then supplied to the suction chamber 30a and the compression chamber 30b.

The operation of the hermetic rotary compressor 20 thus configured will be described. Once the electric motor 23 is activated to rotate the crankshaft 26, the crankshaft eccentric portion 27 rotates eccentrically in the cylinder 31 and the rolling piston 32 rotates in contact with the vane 33, so that suction and compression of the refrigerant (refrigeration cycle working medium) are repeated.

The refrigerating machine oil 50 used in the hermetic compressor 20 is not limited to a particular type. A lubricating oil known in the field of compressors may be used as a base oil of the refrigerating machine oil 50, and the refrigerating machine oil 50 may further contain a known additive as necessary.

Examples of the lubricating oil used as the base oil of the refrigerating machine oil 50 include, but are not limited to: hydrocarbon oils such as mineral oils, olefin polymers, naphthalene compounds, and alkylbenzenes; and oxygen-containing oils, including ester oils such as monoesters, diesters, polyol esters, and complex esters and ether oils such as polyalkylene glycols, polyvinyl ethers, polyphenyl ethers, and perfluoroethers. One of these base oils may be used alone, or two or more thereof may be used in any suitable combination.

The additive contained in the refrigerating machine oil 50 is not limited to a particular type, and examples of the additive include an oiliness agent, a slidability improver, an extreme pressure additive, an antioxidant, an acid scavenger, a metal deactivator, an anti-foaming agent, a corrosion inhibitor, and a dispersant.

In the present embodiment, the base oil of the refrigerating machine oil 50 preferably contains at least one selected from a polyol ester, a polyalkylene glycol, and a polyvinyl ether as a main component and more preferably contains a polyol ester or a polyvinyl ether as a main component. The term "main component" is intended to refer to a component the amount of which is 50% by mass or more based on the total amount (100% by mass) of the base oil in the refrigerating machine oil 50. The amount of the lubricating oil contained as the base oil in the refrigerating machine oil 50 is not limited to a particular value and may be 80% by mass or more, 90% by mass or more, or 95% by mass or more based on the total amount (100% by mass) of the refrigerating machine oil 50.

### [Example of composition of refrigerant]

The refrigerant used in the air conditioner according to the present disclosure is a refrigerant mixture containing a fluoroolefin (fluoroalkene) and propane (R-290). The fluoroolefin is not limited to a particular type, and examples of the fluoroolefin include: fluoroethylenes such as 1,1,2-trifluoroethylene (HFO-1123), *trans*-1,2-difluoroethylene (HFO-1132(E)), *cis*-1,2-difluoroethylene (HFO-1132(Z)), 1,1-difluoroethylene (HFO-1132a), tetrafluoroethylene (FO-1114, TFE), and monofluoroethylene (HFO-1141); and fluoropropenes such as 1,2,3,3,3-pentafluoropropene (HFO-1225ye), 2,3,3,3-tetrafluoropropene (HFO-1234yf), 1,3,3,3-tetrafluoropropene (HFO-1234ze), 1,2,3,3-tetrafluoropropene (HFO-1234ye), and 3,3,3-trifluoropropene (HFO-1243zf).

One of these fluoroolefins may be used alone as a refrigerant, or any suitable combination of two or more of the fluoroolefins may be used as a refrigerant. Among the fluoroolefins, the fluoroethylenes are suitable for use as a refrigerant. Among the fluoroethylenes, 1,1,2-trifluoroethylene (HFO-1123) is particularly suitable for use.

The refrigerant mixture may further contain an "additional refrigerant" in addition to the fluoroolefin and propane. Typical examples of the additional refrigerant include, but are not limited to, a hydrofluorocarbon (HFC), a saturated hydrocarbon other than propane, and carbon dioxide.

Specific examples of the HFC include: fluoromethanes such as difluoromethane (R-32) and trifluoromethane (R-23); fluoroethanes such as fluoroethane (R-161), 1,1-difluoroethane (R-152a), 1,1,1-trifluoroethane (R-143a), 1,1,2,2-tetrafluoroethane (R-134), 1,1,1,2-tetrafluoroethane (R-134a), pentafluoroethane (R-125), difluoroethane, and trifluoroethane; fluoropropanes such as 1,1,1,3,3-pentafluoropropane (R-245fa), 1,1,1,2,3,3-hexafluoropropane (R-236ea), 1,1,1,3,3,3-hexafluoropropane (R-236fa), and 1,1,1,2,3,3,3-heptafluoropropane (R-227ea); fluorobutanes such as 1,1,1,3,3-pentafluorobutane (R-365mfc); and fluoropentanes such as 1,1,1,2,3,4,4,5,5,5-decafluoropentane (R-4310mee) and heptafluorocyclopentane (Re-447ef).

Specific examples of the saturated hydrocarbon include ethane, *n*-propane, cyclopropane, *n*-butane, cyclobutane, isobutane (2-methylpropane), methylcyclopropane, *n*-pentane, isopentane (2-methylbutane), neopentane (2,2-dimethylpropane), and methylcyclobutane.

One of these additional refrigerants may be used alone, or any suitable combination of two or more of the additional refrigerants may be used as a refrigerant. Among the additional refrigerants, R-32 (difluoromethane) is typically suitable for use. As described later, some saturated hydrocarbons can be used as a disproportionation inhibitor. Thus, a saturated hydrocarbon can be used as both an additional refrigerant and a disproportionation inhibitor.

The refrigerant mixture may contain a disproportionation inhibitor for inhibition of disproportionation of the fluoroolefin. Specific examples of the disproportionation inhibitor include, but are not limited to, saturated hydrocarbons with two to five carbon atoms (other than propane) and haloalkanes with one to four carbon atoms other than haloalkanes all the halogen atoms of which are fluorine. For convenience of explanation, a saturated hydrocarbon used as a disproportionation inhibitor will be referred to as a "disproportionation-inhibiting alkane", and a haloalkane used as a disproportionation inhibitor will be referred to as a "disproportionation-inhibiting haloalkane".

As mentioned above, the disproportionation-inhibiting alkane used as a disproportionation inhibitor in the present disclosure may be a saturated hydrocarbon (alkane) with two to five carbon atoms, and specific examples of such a saturated hydrocarbon include ethane, cyclopropane, *n*-butane, cyclobutane, isobutane (2-methylpropane), methylcyclopropane, *n*-pentane, isopentane (2-methylbutane), neopentane (2,2-dimethylpropane), and methylcyclobutane. One of these saturated hydrocarbons may be used alone, or two or more thereof may be used in any suitable combination.

All of the above-mentioned saturated hydrocarbons are gaseous at normal temperature (*n*-pentane and methylcyclobutane have the highest boiling point which is about 36°C, and the other hydrocarbons have a boiling point lower than 36°C), and any of the saturated hydrocarbons can be suitably added as a component of the refrigerant mixture. Any saturated hydrocarbon with six or more carbon atoms is not preferred because such a saturated hydrocarbon is liquid at normal temperature and difficult to add as a component of the refrigerant mixture.

Propane, which is a saturated hydrocarbon with three carbon atoms, can inhibit disproportionation of fluoroolefins. However, as previously mentioned, propane is a main component of the refrigerant mixture in the present disclosure; thus, propane is not regarded as a "disproportionation-inhibiting alkane". Cyclopropane, which is a cyclic compound and different from linear propane (*n*-propane) used as a component of the refrigerant mixture, can be used as a disproportionation-inhibiting alkane.

A saturated hydrocarbon with one carbon atom, namely methane, is not preferred because it has a particularly high global warming potential (GWP). Among saturated hydrocarbons with two to five carbon atoms, cyclopentane has a boiling point of 49°C and is liquid at normal temperature; however, cyclopentane may be used as a disproportionation inhibitor in the present disclosure.

The disproportionation-inhibiting haloalkane used as a disproportionation inhibitor in the present disclosure may be any haloalkane with one to four carbon atoms other than haloalkanes all the halogen atoms of which are fluorine. Specific examples of the disproportionation-inhibiting haloalkane include halomethanes (halogenated methanes) which have one carbon atom, haloethanes (halogenated ethanes) which have two carbon atoms, halopropanes (halogenated propanes) which have three carbon atoms, and halobutanes (halogenated butanes) which have four carbon atoms.

The disproportionation-inhibiting haloalkane used may be one haloalkane selected from halomethanes, haloethanes, halopropanes, and halobutanes, or two or more haloalkanes selected from these disproportionation-inhibiting haloalkanes may be used in any suitable combination. The phrase "two or more haloalkanes selected" is intended to mean not only that two or more disproportionation-inhibiting haloalkanes differing in the number of carbon atoms may be selected (for example, a combination of a halomethane and a halomethane) but also that two or more disproportionation-inhibiting haloalkanes having the same number of carbon atoms and having different halogen substituents may be selected (for example, a combination of a first haloethane and a second haloethane different from the first haloethane). In the case of using a halobutane, the halobutane may have a linear structure or may have a branched structure (structure having the same carbon skeleton as isobutane or 2-methylpropane).

Specifically, the disproportionation-inhibiting haloalkane may have a structure represented by the following formula (1).

CₚH_{q}Xᵣ • • • (1)

In the formula (1), X is a halogen atom selected from the group consisting of fluorine (F), chlorine (Cl), bromine (Br), and iodine (I), p is an integer of 1 or 2, q is an integer of 0 or more, r is an integer of 1 or more, the sum of q and r is 2p + 2, and the halogen atoms X are the same or different when r is 2 or more.

Any haloalkane which is represented by the formula (1) but which contains only F as the halogen atom(s) X is excluded from candidates for the disproportionation-inhibiting haloalkane. This is because any disproportionation-inhibiting haloalkane which contains only F as the halogen atom(s) X is a compound usable as an additional refrigerant component and substantially fails to function as a disproportionation inhibitor.

In a disproportionation-inhibiting haloalkane represented by the formula (1), as described above, the halogen atom X may be at least one of F, Cl, Br, and I and is preferably at least I. When the number of carbon atoms is 2 (p = 2) and the number of halogen atoms is 2 or more (r ≥ 2), the halogen atoms X preferably include at least F and I.

When a disproportionation-inhibiting haloalkane represented by the formula (1) contains Cl and/or Br, the disproportionation-inhibiting haloalkane tends to have a high ozone depletion potential (ODP) and could be limited in availability or handleability. Regardless of what the halogen atom(s) X is (are), some disproportionation-inhibiting haloalkanes represented by the formula (1) are compounds having a relatively high ozone depletion potential (ODP) and/or a relatively high global warming potential (GWP).

In the present disclosure, a disproportionation-inhibiting haloalkane added to the refrigerant mixture can effectively inhibit disproportionation of the fluoroolefin or retard rapid progress of disproportionation of the fluoroolefin even when the amount of the added disproportionation-inhibiting haloalkane is relatively small. In addition, even when a disproportionation-inhibiting haloalkane is used in combination with another disproportionation inhibitor such as a disproportionation-inhibiting alkane, the total amount of the disproportionation inhibitors added to the refrigerant mixture is sufficiently small relative to the total amount of the refrigerant mixture. Thus, the use of a disproportionation-inhibiting haloalkane does not cause any significant impact on the environment even when the disproportionation-inhibiting haloalkane has a relatively high ODP or GWP.

Specific examples of disproportionation-inhibiting haloalkanes represented by the formula (1) include, but are not limited to: halomethanes such as (mono)iodomethane (CH₃I), diiodomethane (CH₂I₂), dibromomethane (CH₂Br₂), bromomethane (CH₃Br), dichloromethane (CH₂Cl₂), chloroiodomethane (CH₂ClI), dibromochloromethane (CHBr₂Cl), tetraiodomethane (CI₄), carbon tetrabromide (CBr₄), bromotrichloromethane (CBrCl₃), dibromodichloromethane (CBr₂Cl₂), tribromofluoromethane (CBr₃F), fluorodiiodomethane (CHFI₂), difluorodiiodomethane (CF₂I₂), dibromodifluoromethane (CBr₂F₂), trifluoroiodomethane (CF₃I), and difluoroiodomethane (CHF₂I); and haloethanes such as 1,1,1-trifluoro-2-iodoethane (CF₃CH₂I), monoiodoethane (CH₃CH₂I), monobromoethane (CH₃CH₂Br), 1,1,1-triiodoethane (CH₃CI₃), and 1-bromo-2-iodo-tetrafluoroethane (CF₂BrCF₂I).

One of these disproportionation-inhibiting haloalkanes may be used alone, or two or more thereof may be used in any suitable combination. Among the disproportionation-inhibiting haloalkanes, at least one selected from the group consisting of diiodomethane (CH₂I₂), difluorodiiodomethane (CF₂I₂), trifluoroiodomethane (CF₃I), difluoroiodomethane (CHF₂I), 1-bromo-2-iodo-tetrafluoroethane (CF₂BrCF₂I), and 1,1,1-trifluoro-2-iodoethane (CF₃CH₂I) is particularly preferred in terms of factors such as availability, ODP value, and handleability.

In the present disclosure, as described above, the refrigerant mixture is composed of at least a fluoroolefin (fluoroalkene) and propane (R-290) and may further contain another refrigerant and/or a disproportionation inhibitor as necessary. In the refrigerant mixture, the amounts (contents) of the fluoroolefin and the propane are not limited to particular values, and the amount (content) of the disproportionation inhibitor is not limited to a particular value either.

For example, the amount of the fluoroolefin is 50% by mass or more and may be 60% by mass or more, 70% by mass or more, or 80% by mass or more based on 100% by mass of the total amount of the refrigerant mixture. The amount of the propane is less than 50% by mass and may be 40% by mass or less, 30% by mass or less, or 20% by mass or less based on 100% by mass of the total amount of the refrigerant mixture.

If the fluoroolefin accounts for less than 50% by mass of the total amount of the refrigerant mixture, the amount of the fluoroolefin in the refrigerant mixture is undesirably low, and the proportion of the propane increases. In this case, the propane, which is flammable, could be highly influential in the refrigerant mixture as a whole. Consequently, the refrigerant mixture fails to offer the advantage of achieving high handleability as well as a low GWP.

In the present embodiment, for example, the proportions of the fluoroolefin and the propane in a typical composition are such that the amount of the fluoroolefin is 80% by mass and the amount of the propane is 20% by mass based on the total amount (total mass of 100% by mass) of the fluoroolefin and the propane. For example, 1,1,2-trifluoroethylene (HFO-1123) is suitable for use as the fluoroolefin in this case, as shown in examples described later (Comparative Examples 1 and 2 and Example 1).

In order to further enhance the disproportionation-inhibiting effect, the proportion of the propane is 20% by mass or more based on the total mass of the fluoroolefin and the propane in the refrigerant mixture. For example, in the typical composition described above, the proportion of the propane to the fluoroolefin (HFO-1123) is 25% by mass; that is, the fluoroolefin:propane ratio is 80:20. The refrigerant mixture having this composition consists only of the fluoroolefin and the propane. In this case, the proportion of the propane to the total mass of the refrigerant mixture is 20% by mass (calculated as 20% by mass/(80% by mass + 20% by mass)) or more. This lower limit of the proportion of the propane applies also when the refrigerant mixture further contains a component other than the fluoroolefin and the propane.

When the refrigerant mixture contains a disproportionation inhibitor, the amount of the disproportionation inhibitor considered as a component of the refrigerant mixture is from 0.1 to 10% by mass based on the total amount (100% by mass) of the refrigerant mixture. If the amount of the disproportionation inhibitor is less than 0.1% by mass, the addition of the disproportionation inhibitor could, depending on the composition of the refrigerant mixture, fail to provide a satisfactory inhibiting effect on disproportionation of the fluoroolefin. If the amount of the disproportionation inhibitor is more than 10% by mass, the disproportionation-inhibiting effect achieved could be disproportionate to the amount of the disproportionation inhibitor added to (contained in) the refrigeration mixture.

As described above, the amount of the disproportionation inhibitor is up to 10% by mass. The amount of the disproportionation inhibitor may be 9.5% by mass or less, 9.0% by mass or less, 8.5% by mass or less, 5% by mass or less, or 3% by mass or less. The amount of the disproportionation inhibitor is at least 0.1% by mass as described above and may be 0.2% by mass or more, 0.5% by mass or more, 0.8% by mass or more, 1.0% by mass or more, or 1.2% by mass or more.

In general, most refrigerants for use in the air conditioner 10 contain impurities in an amount of 2 to 3% by mass or less. For example, commercially-available HFO-1123 with a purity of about 97% by mass is known, and this HFO-1123 contains residual synthesis materials or by-products as impurities in an amount of less than 3% by mass.

The disproportionation inhibitor added to the fluoroolefin can effectively inhibit or retard disproportionation of the fluoroolefin even when the amount of the added disproportionation inhibitor is at the level of impurity content (3% by mass or less). Thus, the amount of the disproportionation inhibitor to be added cannot be definitely specified. The above upper limit, lower limit, and other values of the amount of the disproportionation inhibitor in the refrigerant mixture are merely mentioned as typical preferred examples.

### [Refrigeration cycle working medium]

In the air conditioner 10 according to the present disclosure, a refrigeration cycle working medium is composed of the refrigerating machine oil 50 retained in the hermetic compressor 20 and the refrigerant mixture described above. The refrigeration cycle working medium exhibits a refrigerant dissolved viscosity of 2 to 4 mm²/s under a working condition at a temperature of 28 to 60°C and an absolute pressure of 2.2 to 4.3 MPa. For convenience of explanation, this working condition will be referred to as the "working condition 1".

The temperature range and the pressure range in the working condition 1 are set in view of achieving a satisfactory COP (Coefficient of Performance) in the air conditioner 10.

Specifically, the upper limits of the temperature and pressure ranges are determined by physical property calculation using refrigerant thermophysical property database software named "Refprop 10" (NIST, National Institute of Standards and Technology). In the calculation, HFO-1123 is selected as a typical example of the fluoroolefin, and the refrigerant mixture (consisting of HFO-1123 and R-290) is assumed to have the above-described typical composition with a HFO-1123:R-290 ratio of 80:20 (mass ratio). The upper limits are calculated values (calculable limits) of the critical temperature and the critical pressure of the refrigerant mixture.

The lower limits of the temperature and pressure ranges are determined by using Refprop 10 mentioned above to theoretically calculate the condensation temperature and pressure in cooling and heating operations performed at an annual energy consumption efficiency. The annual energy consumption efficiency refers to an APF (Annual Performance Factor), which indicates the cooling and heating capacity per kW of power consumption that the air conditioner 10 exhibits when operated according to JIS C 9612 under the conditions as specified in JIS C 9612.

The refrigeration cycle working medium may exhibit a refrigerant dissolved viscosity of 2 to 4 mm²/s under a working condition at a temperature of 115°C or lower and an absolute pressure of 1.7 to 4.6 MPa. For convenience of explanation, this working condition will be referred to as the "working condition 2".

The upper temperature limit in the working condition 2 is set based on the insulation class of insulation paper used in the stator 25 which is a component of the electric motor 23 of the hermetic compressor 20.

The stator 25 includes a magnet wire that generates a magnetic field upon receiving an electric current and a magnetic steel sheet, and insulation paper is inserted between the magnetic wire and the magnetic steel sheet. Insulation classes of insulation paper are specified in association with temperature in JIS C 4003 (see Table 1 "Thermal class and temperature" presented in "4. Thermal class" in JIS C 4003). For example, when the thermal class of insulation paper is class E, the maximum allowable temperature of the insulation paper is 120°C.

Considering factors such as temperature detection time lag or heat release between the refrigeration cycle working medium and the stator 25, a safety margin of 5 K can be set by way of example. When class E insulation paper is used, the upper temperature limit of the refrigeration cycle working medium is set to or below 115°C which corresponds to the insulation paper's maximum allowable temperature minus the safety margin of 5 K. Operating the hermetic compressor 20 at a temperature higher than the upper temperature limit could cause breakdown of insulation between the magnet wire and the magnetic steel sheet, and such insulation breakdown significantly increases the likelihood of electric discharge phenomenon.

The maximum allowable temperature of insulation paper varies for different thermal classes; for example, the maximum allowable temperature of class B insulation paper is 130°C, and the maximum allowable temperature of class F insulation paper is 155°C. Thus, the temperature threshold (i.e., the upper temperature limit in the working condition 2) depends on the selection of the thermal class of insulation paper.

The safety margin for the temperature of the working fluid is not limited to 5 K as the safety margin depends on the distance between a detector for detecting the temperature of the working medium and the stator or on the motor efficiency. The safety margin may be set to any value in the range of 0 to 20 K. It should be noted that the temperature of the refrigeration cycle working medium must not be above 150°C regardless of the selected thermal class because disproportionation of the fluoroolefin is likely to occur at such a high temperature.

The lower temperature limit in the working condition 2 may be set to 55°C. Thus, the temperature in the working condition 2 may range from 55 to 115°C.

The upper limit of the absolute pressure in the working condition 2 can be set based on the critical pressures of the fluoroolefin and the propane. Specifically, the critical pressure of HFO-1123, which is a typical example of the fluoroolefin, is 4.54 MPa, and the critical pressure of the propane is 4.25 MPa. Based on these critical pressures, the upper limit of the absolute pressure can be set to 4.6 MPa. The lower limit of the absolute pressure in the working condition 2 can be set to around 1.7 MPa which is an evaporating pressure in the cooling operation.

In the air conditioner 10 according to the present disclosure, the refrigerant dissolved viscosity of the refrigeration cycle working medium is in the range of 2 to 4 mm²/s as described above at least under the working condition 1 described above. The refrigerant dissolved viscosity of the refrigeration cycle working medium may be in the range of 2 to 4 mm²/s also under the working condition 2 described above.

The sliding portions of the hermetic compressor 20 of the air conditioner 10 are lubricated by the refrigerating machine oil 50. The refrigerants can naturally dissolve in the refrigerating machine oil 50. Thus, the refrigerant dissolved viscosity of the refrigerating machine oil 50 varies depending on factors such as the temperature and pressure in the hermetic compressor 20. In general, the compatibility of the refrigerating machine oil 50 with the refrigerants (solubility of the refrigerants in the refrigerating machine oil 50) differs depending on various factors such as the type and composition of the refrigerating machine oil 50 (such as the type of a base oil, the mixing ratio between a plurality of base oils, and the type or amount of an additive). Thus, the refrigerant dissolved viscosity of the refrigeration cycle working medium can be adjusted (set) to a given range by suitably adjusting both the viscosity of the refrigerating machine oil 50 used in the hermetic compressor 20 and the compatibility of the refrigerating machine oil 50 with the refrigerants used in the refrigeration cycle.

The refrigerant dissolved viscosity of the refrigeration cycle working medium differs, for example, from a dissolved viscosity measured quasi-statically under strictly controlled conditions in an in-vitro environment. The refrigeration cycle working medium and the refrigerating machine oil 50 contained in the hermetic enclosure 21 are vigorously stirred, and there are variations in the temperature and pressure in the hermetic enclosure 21. Thus, the measurement of the refrigerant dissolved viscosity of the refrigeration cycle working medium needs to take into account various factors such as time delay required for dissolution of the refrigeration cycle working medium in the refrigerating machine oil 50.

In the present disclosure, the refrigerant dissolved viscosity of the refrigeration cycle working medium is measured using a viscosity sensor while the hermetic compressor 20 is in operation. Specifically, for example, a viscosity sensor manufactured by Cambridge Viscosity, Inc. (product name: Miniature Viscometer SPC 501) is attached to a lower portion of the hermetic enclosure 21. The viscosity sensor is placed in such a way that the sensing part of the viscosity sensor is in contact with the refrigerating machine oil 50. Thus, the refrigerant dissolved viscosity during operation of the hermetic compressor 20 is measured on a real-time basis.

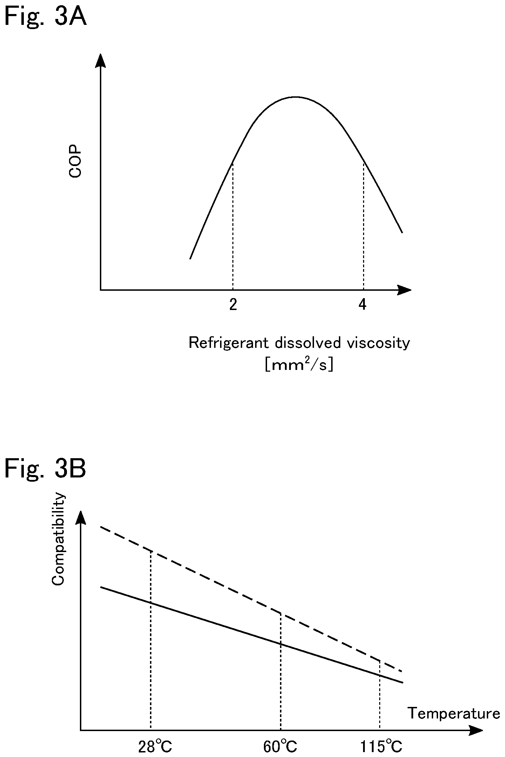

FIG 3A is a graph showing an example of the relationship between the refrigeration cycle working medium and the COP of the air conditioner 10 in the case where HFO-1123 is selected as the fluoroolefin, the refrigerant mixture used has the typical composition described above (HFO-1123:R-290 = 80:20 (mass ratio)), and a polyol ester is used as the refrigerating machine oil 50.

As shown in FIG 3A, if the refrigerant dissolved viscosity of the refrigeration cycle working medium is less than 2 mm²/s under the working condition 1 described above, satisfactory sliding performance cannot be achieved at the sliding portions of the hermetic compressor 20, and this results in reduced air-conditioning performance and a failure to achieve a satisfactory COP. If the refrigerant dissolved viscosity of the refrigeration cycle working medium is more than 4 mm²/s under the working condition 1 described above, the resistance occurring during stirring of the refrigeration cycle working medium or at start-up of the hermetic compressor 20 increases, and accordingly the energy consumption of the refrigeration cycle increases and at the same time the air-conditioning performance declines, with the result that a satisfactory COP cannot be achieved.

In contrast, when the refrigerant dissolved viscosity of the refrigeration cycle working medium is in the range of 2 to 4 mm²/s under the working condition 1 described above, satisfactory sliding performance can be achieved at the sliding portions of the hermetic compressor 20, and the increase in resistance during operation of the hermetic compressor 20 can be reduced. Thus, the refrigeration cycle can achieve both reduced energy consumption and satisfactory refrigeration capacity (satisfactory air-conditioning performance). As a result, the air conditioner 10 using a fluoroolefin as a refrigerant can achieve a satisfactory COP and successfully inhibit disproportionation of the fluoroolefin.

Additionally, in the present disclosure where the refrigerant mixture contains a fluoroolefin and propane, the propane contained in the refrigerant mixture easily dissolves in the refrigerating machine oil 50 when the refrigerant dissolved viscosity of the refrigeration cycle working medium is in the range specified above. This is because, as clearly seen from the above-mentioned typical examples of the base oil, the main component of the refrigerating machine oil 50 has a molecular structure having a hydrocarbon skeleton.

Specifically, the molecular structure of the refrigerating machine oil 50 is similar to the molecular structure of R-290 (n-propane) which is a hydrocarbon, while the molecular structure of a fluorine-atom containing refrigerant such as the fluoroolefin is not so similar to the molecular structure of the refrigerating machine oil 50. Thus, R-290 is more soluble in the refrigerating machine oil 50 than the fluoroolefin.

An oxygen-containing oil such as a polyol ester or polyvinyl ether may be used as a base oil of the refrigerating machine oil 50. Such an oxygen-containing oil has a high polarity. This is because a molecule has a high polarity when the dipole moment of the molecule, which is the vector sum of bond moments of the bonds in the molecule, is high.

In conventional refrigeration cycles, for example, HFCs such as R-32 (difluoromethane) are used as refrigerants. Fluoroolefins such as HFO-1123 have a higher dipole moment than HFCs. Thus, fluoroolefins are more soluble in the refrigerating machine oil 50 than HFCs.

For example, a conventional refrigeration cycle as taught in Patent Literature 1 is configured on the assumption of using an HFC refrigerant such as R-32 or a refrigerant mixture containing R-32 (e.g., R-410A which is a refrigerant mixture of R-32 and R-125 (pentafluoroethane)). Thus, when the refrigerant mixture is used in such a conventional refrigeration cycle, there is no need to take into account the solubility of the different refrigerants in the refrigerating machine oil 50.

In contrast, the present disclosure is based on the assumption that a fluoroolefin is used as a main component of a refrigerant mixture and that propane is used as an auxiliary component of the refrigerant mixture to enhance the practical utility of the fluoroolefin as a refrigerant. The fluoroolefin and the propane differ in the solubility in the refrigerating machine oil 50, and the propane acts to inhibit disproportionation of the fluoroolefin. An investigation conducted on the refrigeration cycle working medium taking into account the difference in solubility has led to the unique finding that the refrigerant dissolved viscosity should be adjusted to the range of 2 to 4 mm²/s at least under the working condition 1 described above.

In particular, since HFCs are less soluble in the refrigerating machine oil 50 than fluoroolefins, a refrigerant dissolved viscosity suitable for a conventional refrigeration cycle working medium cannot apply to a refrigerant mixture whose main component is a fluoroolefin. As previously described, fluoroolefins are prone to disproportionation, and the use of a fluoroolefin necessitates considering how to successfully inhibit disproportionation of the fluoroolefin. In view of these circumstances, the present disclosure has uniquely found the working condition 1 described above, the working condition 2 described above, and the refrigerant dissolved viscosity range suitable for these working conditions.

According to the present disclosure, when the hermetic compressor 20 is not in operation, the amount of the fluoroolefin contained in the refrigerant mixture present in the hermetic enclosure 21 is apparently large since the propane contained in the refrigerant mixture easily dissolves in the refrigerating machine oil 50. When the hermetic compressor 20 is in operation, the propane dissolved in the refrigerating machine oil 50 is liberated from the refrigerating machine oil 50 as the temperature increases.

Thus, the propane, which is more combustible than the other refrigerant(s) contained in the refrigerant mixture, easily dissolves in the refrigerating machine oil 50 when the hermetic compressor 20 is not in operation. This means that the apparent amount of the propane in the refrigerant mixture decreases. Hence, even in the event of leakage of the refrigerant mixture, the risk of burning of the leaking refrigerant mixture can be successfully reduced.

When the hermetic compressor 20 is in operation, the propane is liberated from the refrigerating machine oil 50, and the apparent amount of the propane in the refrigerant mixture increases. Thus, disproportionation of the fluoroolefin can be successfully inhibited by the propane which has a disproportionation-inhibiting action on the fluoroolefin.

Furthermore, in the present disclosure, the compatibility of the refrigerant mixture with the refrigerating machine oil 50 may be adjusted, especially based on the working condition 2, to optimize the apparent component ratio of the refrigerant mixture in the hermetic compressor 20 (i.e., in the hermetic enclosure 21).

Specifically, the compatibility of the refrigerant mixture with the refrigerating machine oil 50 may be adjusted such that the proportion of the propane to the total mass of the fluoroolefin and the propane in the hermetic compressor 20 (in the hermetic enclosure 21) is 20% by mass or more in case that the temperature in the above-described working condition 2 is higher than 115°C. For convenience of explanation, this condition will be referred to as the "compatibility adjustment condition 1".

The compatibility of the refrigerant mixture with the refrigerating machine oil 50 may be adjusted such that the proportion of the propane to the total mass of the fluoroolefin and the propane in the hermetic compressor 20 (in the hermetic enclosure 21) is less than 20% by mass in case that the temperature in the above-described working condition 2 is 115°C or lower (preferably from 55 to 115°C). For convenience of explanation, this condition will be referred to as the "compatibility adjustment condition 2".

For either the compatibility adjustment condition 1 or compatibility adjustment condition 2, the composition of the refrigerant mixture may be such that the proportion of the propane to the total mass of the fluoroolefin and the propane is more than 20% by mass before the refrigerant mixture is included into the refrigeration cycle. The inclusion of the refrigerant mixture into the refrigeration cycle leads to a part of the refrigerant mixture being in contact with the refrigerating machine oil 50. As previously described, the propane is easily soluble in the refrigerating machine oil 50. Thus, when the hermetic compressor 20 is not in operation, that is, when the refrigeration cycle is not working, the propane dissolves in the refrigerating machine oil 50 over time. Thus, the amount of the propane is adjusted to be above the specified lower limit before inclusion of the refrigerant mixture into the refrigeration cycle.

The compatibility adjustment condition 1 or compatibility adjustment condition 2 will be described with reference to FIG 3B. FIG 3B is a graph showing the relationship between the compatibility with the refrigerating machine oil 50 and the temperature for each of the fluoroolefin and the propane of which the refrigerant mixture is composed. FIG 3B shows the compatibility of HFO-1123 which is a typical example of the fluoroolefin. The solid line represents the compatibility of HFO-1123, and the dashed line represents the compatibility of R-290.

As previously described, R-290 has higher compatibility with the refrigerating machine oil 50 than HFO-1123. Thus, as shown in FIG 3B, the solid line representing the compatibility of HFO-1123 is located below the dashed line representing the compatibility of R-290.

The compatibility decreases with increasing temperature. Thus, the refrigerants dissolved in the refrigerating machine oil 50 are released from the refrigerating machine oil 50 as the temperature increases. This means that the amount of the refrigerants circulating in the refrigeration cycle increases as the temperature increases. As stated above, R-290 has higher compatibility than HFO-1123; thus, an increase in temperature entails an increase in the proportion of R-290 in the refrigerant mixture circulating in the refrigeration cycle.

In the present disclosure, the compatibility with the refrigerating machine oil 50 is adjusted such that the proportion of R-290 to the total mass of HFO-1123 and R-290 in the refrigerant mixture circulating in the refrigeration cycle is at least 20% by mass in case that the temperature of the refrigeration cycle working medium reaches 115°C. This adjustment is made taking into account the difference as shown in FIG 3B between the compatibility-versus-temperature relationships of the refrigerants. As a result of such compatibility adjustment, the concentration (proportion) of R-290 in the refrigerant mixture becomes high when the temperature of the refrigeration cycle working medium is 115°C or higher, that is, when the compatibility adjustment condition 1 is satisfied. This can ensure satisfactory inhibition of disproportionation of the fluoroolefin.

Furthermore, in the operation temperature range including the temperature range of the working condition 1, i.e., under the compatibility adjustment condition 2, the proportion of R-290 in the refrigerant mixture is at most less than 20% by mass. In this case, even if the refrigerant mixture leaks out of the hermetic compressor 20, the combustibility of the leaking refrigerant mixture can be successfully reduced thanks to the lowered concentration (proportion) of R-290, and the risk of burning of the refrigerant mixture can be reduced.

### Examples

The present disclosure will be described more specifically based on an example and comparative examples. The present disclosure is not limited to the example described below. Those skilled in the art can make various changes, modifications, or alterations without departing from the scope of the present disclosure.

### (Experimental system for disproportionation)

A hermetic pressure-resistant vessel (hermetic stainless steel vessel TVS-N2 (trade name) manufactured by Taiatsu Garasu Kogyo, Co. Ltd., internal volume = 50 mL) was fitted with a pressure sensor (VESVM 10-2m (trade name) manufactured by Valcom Co., Ltd.) for measuring the internal pressure of the pressure-resistant vessel, a thermocouple (PL thermocouple gland PL-18-K-A 4-T (trade name) manufactured by Conax Technologies) for measuring the internal temperature of the pressure-resistant vessel, and an electric discharge device for effecting electric discharge in the pressure-resistant vessel.

A gas cylinder holding a fluoroolefin, in particular 1,1,2-trifluoroethylene (HFO-1123 manufactured by SynQuest Laboratories, Inc. and sold by Hydrus Chemical Inc.; this HFO-1123 contains 5% limonene (liquid phase) as a stabilizer), was connected to the pressure-resistant vessel in such a way as to enable pressure adjustment. Two mantle heaters (pipe-shaped mantle heaters P-31 and P-51 (trade names) manufactured by Tokyo Garasu Kikai Co., Ltd.) were placed to heat the entire pressure-resistant vessel, and a ribbon heater (flexible ribbon heater manufactured by Tokyo Technological Labo Co., Ltd., 1 m, 200 W) was placed to heat the piping. In this manner, an experimental system for disproportionation was constructed.

### (Comparative Example 1)

In the experimental system, the HFO-1123 was introduced from the gas cylinder into the pressure-resistant vessel, and propane (R-290) was added in an amount of 10% by mass of the total mass of the refrigerant mixture (that is, the HFO-1123:R-290 mass ratio was 90:10). The refrigerant mixture has combustibility of class A2 and has a GWP of less than 10.

To induce disproportionation of the HFO-1123, the electric discharge device was operated to effect 300-V discharge once at an internal temperature of about 27°C (300 K). As a result, the occurrence of disproportionation was observed.

### (Comparative Example 2)

In the experimental system, the HFO-1123 was introduced from the gas cylinder into the pressure-resistant vessel, and propane was added in an amount of 15% by mass of the total mass of the refrigerant mixture (that is, the HFO-1123:R-290 mass ratio was 85:15). The refrigerant mixture has combustibility of class A2 and has a GWP of less than 10.

To induce disproportionation of the HFO-1123, the electric discharge device was operated to effect 300-V discharge five times at an internal temperature of about 27°C (300 K). As a result, the occurrence of disproportionation was observed.

### (Example 1)

In the experimental system, the HFO-1123 was introduced from the gas cylinder into the pressure-resistant vessel, and propane was added in an amount of 20% by mass of the total mass of the refrigerant mixture (that is, the HFO-1123:R-290 mass ratio was 80:20). The refrigerant mixture has combustibility of class A3 and has a GWP of less than 10.

To induce disproportionation of the HFO-1123, the electric discharge device was operated to effect 300-V discharge a plurality of times at an internal temperature of about 27°C (300 K). However, the occurrence of disproportionation was not observed.

The present invention is not limited to the embodiments described above, and various modifications can be made insofar as the modifications come within the scope as defined by the appended claims. The technical scope of the present invention encompasses embodiments obtained by combining technical features disclosed in different embodiments or variants.

From the foregoing description, numerous modifications and other embodiments of the present invention are obvious to those skilled in the art. Accordingly, the foregoing description is to be construed as illustrative only, and is provided for the purpose of teaching those skilled in the art the best mode for carrying out the present invention. The structural and/or functional details may be substantially modified without departing from the scope of the present invention.

### Industrial Applicability

The present invention is applicable widely and suitably in the field of air conditioners which use a refrigerant mixture containing a fluoroolefin such as 1,1,2-trifluoroethylene (HFO-1123) and propane (R-290).

### Reference Signs List

10: air conditioner
11: outdoor unit
12: indoor unit
13: unit-to-unit piping
13a: pipe connector
13b: pipe connector
14: outdoor heat exchanger
15: outdoor fan
16: expansion valve
17: switching valve
18: indoor heat exchanger
19: indoor fan
20: hermetic compressor
21: hermetic enclosure
22: discharge pipe
23: electric motor
24: rotor
25: stator
26: crankshaft
27: crankshaft eccentric portion
30: compression mechanism
30a: suction chamber
30b: compression chamber
30c: suction hole
31: cylinder
32: rolling piston
33: vane
34: upper bearing
35: lower bearing
36: suction liner
37: outer suction pipe
40: accumulator
50: refrigerating machine oil

## Claims

1. An air conditioner comprising a refrigeration cycle including a hermetic compressor in which a refrigerating machine oil is retained, wherein
the air conditioner uses a refrigerant mixture as a refrigerant, the refrigerant mixture containing a fluoroolefin and propane, and
a refrigeration cycle working medium composed of at least the refrigerating machine oil and the refrigerant mixture exhibits a refrigerant dissolved viscosity of 2 to 4 mm²/s under a working condition at a temperature of 28 to 60°C and an absolute pressure of 2.2 to 4.3 MPa.

2. The air conditioner according to claim 1, wherein the refrigeration cycle working medium exhibits a refrigerant dissolved viscosity of 2 to 4 mm²/s under a working condition at a temperature of 115°C or lower and an absolute pressure of 1.7 to 4.6 MPa.

3. The air conditioner according to claim 2, wherein the temperature in the working condition ranges from 55 to 115°C.

4. The air conditioner according to claim 2, wherein compatibility of the refrigerant mixture with the refrigerating machine oil is adjusted such that a proportion of the propane to a total mass of the fluoroolefin and the propane in the hermetic compressor is 20% by mass or more in case that the temperature in the working condition is higher than 115°C.

5. The air conditioner according to claim 2, wherein compatibility of the refrigerant mixture with the refrigerating machine oil is adjusted such that a proportion of the propane to a total mass of the fluoroolefin and the propane in the hermetic compressor is less than 20% by mass in case that the temperature in the working condition is 115°C or lower.

6. The air conditioner according to claim 4 or 5, wherein the proportion of the propane to the total mass of the fluoroolefin and the propane in the refrigerant mixture is more than 20% by mass before the refrigerant mixture is included into the refrigeration cycle.

7. The air conditioner according to claim 1, wherein the fluoroolefin is at least one selected from the group consisting of 1,1,2-trifluoroethylene, *trans*-1,2-difluoroethylene, *cis*-1,2-difluoroethylene, 1,1-difluoroethylene, tetrafluoroethylene, and monofluoroethylene.

8. The air conditioner according to claim 1, wherein the refrigerant mixture further contains difluoromethane.

9. The air conditioner according to claim 1, wherein the refrigerant mixture further contains a disproportionation inhibitor.

10. The air conditioner according to claim 9, wherein
the disproportionation inhibitor is a saturated hydrocarbon with two to five carbon atoms or a haloalkane with one or two carbon atoms,
the saturated hydrocarbon is other than propane, and
the haloalkane is other than a fluoroalkane containing only fluorine as a halogen substituent.

11. The air conditioner according to claim 1, wherein the hermetic compressor includes a rotary compression mechanism.

12. The air conditioner according to claim 1, wherein the hermetic compressor is inverter-driven.
